# EUROPÄISCHE PATENTSCHRIFT

(11) **EP 1 011 915 B1**
(45) Veröffentlichungstag und Bekanntmachung des Hinweises auf die Patenterteilung: **02.01.2002**
(21) Anmeldenummer: 98954272.5
(22) Anmeldetag: 11.09.1998
(51) Int. Cl.: B23Q 5/40, B23Q 41/00, F16H 25/20

(54) **ANTRIEBSVORRICHTUNG FÜR MEHRERE AGGREGATE EINER MASCHINE**
DRIVE DEVICE FOR SEVERAL UNITS OF A MACHINE
DISPOSITIF D'ENTRAINEMENT POUR PLUSIEURS ORGANES D'UNE MACHINE

(30) Priorität: 12.09.1997 DE 19740208
(43) Veröffentlichungstag der Anmeldung: 28.06.2000
(73) Patentinhaber: Fraunhofer-Gesellschaft zur Förderung der angewandten Forschung e.V., 80636 München (DE)
(72) Erfinder: THOMAS, Volker, D-09123 Chemnitz (DE); HARZBECKER, Christian, D-09123 Chemnitz (DE)
(74) Vertreter: Pfenning, Meinig & Partner
(86) Internationale Anmeldenummer: EP9805791
(87) Internationale Veröffentlichungsnummer: WO9914014

(56) Entgegenhaltungen:
- DE-A- 4 113 629
- DE-A- 4 432 308
- US-A- 4 977 788
- PATENT ABSTRACTS OF JAPAN vol. 13, no. 485 (M-887), 6. November 1989 & JP 01 193138 A (NISSAN MOTOR CO LTD), 3. August 1989

## Beschreibung

Die Erfindung betrifft eine Antriebsvorrichtung für mehrere Aggregate einer Maschine.

Aus der DE 44 32 308 C2 ist eine Antriebsvorrichtung für Nebenaggregate, wie Reitstock oder Lünette, einer CNC-Drehmaschine bekannt, bei der neben der lagegeregelten Hauptschubachse für einen Längs- und Querschlitten eine als Schraubspindel ausgebildete zusätzliche lagegeregelte Vorschubachse parallel zur Hauptvorschubachse angeordnet ist. Die als Schraubspindel ausgebildete Vorschubachse wird durch einen weiteren Antriebsmotor angetrieben, und eine Mutter mit Verdrehsicherung und einer Kupplungseinrichtung zur Mitnahme der Nebenaggregate ist auf der Schraubspindel angeordnet. Die Mutter mit Kupplungseinrichtung wird jeweils unter das zu verschiebende Nebenaggregat gefahren, und ein im Nebenaggregat vorhandener Mitnehmerbolzen wird ausgefahren und in die Kupplungseinrichtung eingerastet. Umgekehrt wird durch Ziehen des Mitnehmerbolzens die Mitnahme des Nebenaggregats unterbrochen.

Diese bekannte Antriebseinrichtung hat den Nachteil, daß immer nur ein Aggregat positioniert bzw. mitgenommen werden kann, während die anderen während dieser Zeit ortsfest bleiben.

Aus der US 4 977 788 ist eine Antriebsvorrichtung für mehrere Aggregate einer Maschine vorgesehen, die einen Gleitschraubtrieb aufweist. Dieser ist am Spindelumfang mit Längsnuten versehen, in die Sperrklinken zum stufenweisen Positionieren der Aggregate einrastbar sind.

Der Erfindung liegt daher die Aufgabe zugrunde, eine Antriebsvorrichtung für mehrere Aggregate einer Maschine zu schaffen, mit der die Aggregate gleichzeitig oder unabhängig voneinander einzeln oder auch in Gruppen positioniert werden können.

Diese Aufgabe wird erfindungsgemäß durch die Merkmale des Hauptanspruches gelöst.

Dadurch, daß auf der Schraubtriebspindel mehrere den Aggregaten zugeordnete Schraubtriebmuttern vorgesehen sind und die Schraubtriebmutter eines jeden zu positionierenden Aggregates in einem fest mit dem Aggregat verbundenen Gehäuse drehbar aber axial unverschiebbar gelagert ist, wobei durch eine Bremse, die eine kraftschlüssige Verbindung realisiert, das jeweils zu betätigende Aggregat eine Wirkverbindung zur Spindel hergestellt ist, während für dasjenige Aggregat, das während dieser Zeit in Ruhe bleiben soll, die Wirkverbindung gelöst wird und statt dessen eine kraftschlüssige Verbindung der Mutter mit der Spindel hergestellt wird, die ein Umlaufen der Mutter mit der Spindel bewerkstelligt und somit ein unkontrolliertes Verdrehen der Mutter ausschließt, können die auf einer Spindel sitzenden Aggregate unabhängig und/oder gleichzeitig positioniert werden.

Durch die in den Unteransprüchen angegebenen Maßnahmen sind vorteilhafte Weiterbildungen und Verbesserungen möglich.

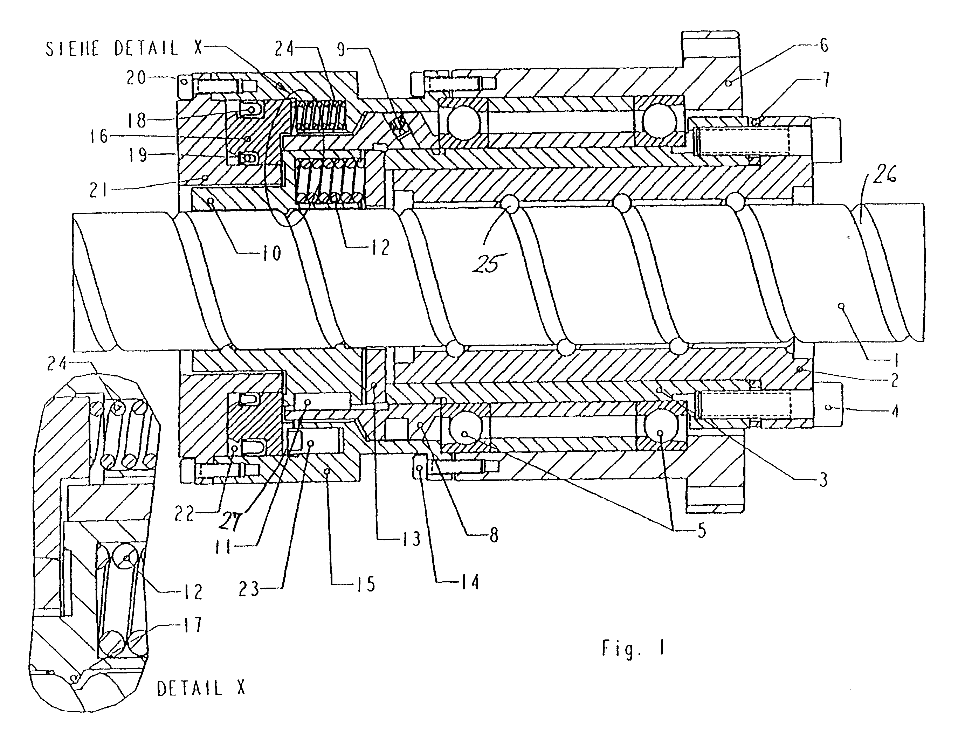

Ein Ausführungsbeispiel der Erfindung ist in der Zeichnung dargestellt und wird in der nachfolgenden Beschreibung, beispielsweise für eine Drehmaschine mit Reitstock, Lünettenschlitten und dergleichen, näher erläutert.

Die einzige Figur zeigt einen Schnitt durch einen Teil der Spindel mit einer auf der Spindel sitzenden angetriebenen Einheit. Die in der Figur teilweise dargestellte Antriebsvorrichtung weist eine Wälzschraubtriebspindel 1 auf, auf der eine Mehrzahl von mit den jeweiligen Aggregaten verbundenen angetriebenen Einheiten sitzt. Eine der angetriebenen Einheiten ist in der Figur im Detail dargestellt. Die Schraubtriebspindel 1 wird von einem nicht dargestellten Motor drehend angetrieben.

Jede angetriebene Einheit weist eine Wälzschraubtriebmutter auf, die über Kugeln 25 in Gewindegängen 26 axial verschoben werden kann. Die Schraubtriebmutter 2 ist in einer Hülse 3 aufgenommen und über Schrauben 4 mit ihr fest verbunden. Auf den Schrauben 4 zwischen Hülse 3 und Schraubtriebmutter 2 sind jeweils Paßscheiben 7 angeordnet, die erforderlich sind, um die Schraubenlöcher der Schraubtriebmutter 2 und der Hülse 3 zur Deckung bringen zu können. Die Hülse 3 ist über Wälzlager 5 im Gehäuse 6 des zugehörigen Aggregates gelagert. Auf ein Ende der Hülse 3 ist eine Spannmutter 8 aufgeschraubt, die durch mindestens eine Sicherungsschraube gesichert wird und die die Wälzlager 5 festlegt. Der über die Hülse 3 herausragende Teil der Spannmutter 8 ist zylinderförmig ausgebildet, und in diesen Zylinder greift ein Teil einer hülsenförmigen Bremse 10 ein, die axial um einen kleinen Betrag verschiebbar ist, aber durch eine Paßfeder 11 verdrehsieher gelagert ist. In der Schraubtriebmutter 2 zugewandten Stirnfläche der hülsenförmigen Bremse 10 ist mindestens eine Bohrung vorgesehen, die als Aufnahmebohrung für eine Feder 12 dient. Vorzugsweise sind über den Umfang der Bremse 10 mehrere Aufnahmebohrungen und mehrere Federn 12 angeordnet. Die Federn stützen sich an einer Scheibe 13 ab, die zwischen Stirnfläche der Bremse 10 und Hülse 3 liegt. Die hülsenförmige Bremse 10 ist auf ihrem Innenumfang mit einem spindelförmigen Gewindesteg 17 versehen, der in die Gewindegänge 26 der Schraubtriebspindel 1 eingreift.

Am Gehäuse 6 des zugeordneten Aggregates ist über Schrauben 14 ein Zylinder 15 befestigt, der gleichfalls die Wälzlager 5 sichert und in dessen Hohlraum ein Ringkolben 16 angeordnet ist, der über Dichtung 18, 19 abgedichtet ist. Ein mit Schrauben 20 am Zylinder 15 befestigter Zylinderboden 21 begrenzt zusammen mit dem Zylinder 15 und dem Ringkolben 16 einen Raum 22 für ein Druckmedium, vorzugsweise für Hydrauliköl. In der zum Zylinderboden 21 entgegengesetzten Stirnfläche des Ringkolbens 16 ist mindestens eine Ausnehmung 27 vorgesehen, in die ein mit dem Zylinder 15 verbundener Führungsbolzen 23 eingreifen kann. In dem Zylinder 15 sind vorzugsweise mehrere Aufnahmebohrungen vorgesehen, in die Federn 24 unter Vorspannung eingesetzt sind, die sich an dem Zylinder 15 und an dem Ringkolben 16 abstützen.

In den Ruhepausen für das Aggregat sorgt die über die Federn 12 mechanisch betätigte Bremse dafür, daß die Wälzschraubtriebmutter 2 über Reibschluß fest mit der Wälzschraubtriebspindel 1 verbunden ist. Dazu drücken die Federn 12 einerseits gegen die Scheibe 13, so daß ein Kraftschluß zwischen Hülse 3, Scheibe 13 und Federn 12 gegeben ist, und andererseits gegen die hülsenförmige Bremse 10 derart, daß, wie im Detail X gezeigt wird, der Gewindesteg 17 an der der Schraubtriebmutter 2 abgewandten Gewindeflanke der Gewindegänge 26 der Schraubtriebspindel 1 kraftschlüssig anliegt. Durch diesen (ersten) Reibschluß zwischen den genannten Teilen ist die Wälzschraubtriebmutter 2 mit der Wälzschraubtriebspindel 1 verbunden, und bei sich drehender Schraubtriebspindel dreht sich somit die Schraubtriebmutter 2 ohne Schlupf mit, wodurch das dazugehörige Aggregat (Gehäuse 6) nicht verschoben wird und ortsfest bleibt.

Wenn das jeweilige Aggregat positioniert werden soll, wird das Druckmedium - vorzugsweise Hydraulikölüber nicht dargestellte Verbindungen in den Ölraum 22 geleitet, wodurch sich der Ringkolben 16 nach rechts bewegt, nach einem kurzen Weg die Bremse 10 erreicht und diese gegen den Druck der Federn 12 weiter nach rechts mitnimmt, bis er an der Spannmutter anliegt. Zwischen Ringkolben 16 und Spannmutter 8 entsteht ein (zweiter) Reibschluß, der ein gegenseitiges Verdrehen verhindert. Da der Ringkolben 16 über den Mitnehmer bzw. Führungsbolzen 23 zum Zylinder 15 gegen Verdrehen gesichert ist, besteht nun eine feste Verbindung zwischen der Wälzschraubtriebmutter 2 und dem Gehäuse 6. Gleichzeitig besteht keine Anlage mehr zwischen dem Gewindesteg 17 der Bremse 10 und den Gewindeflanken der Gewindegänge 26 der Wälzschraubtriebspindel 1.

Wenn der Hydraulikdruck im Ölraum 22 wieder abgeschaltet wird, schieben die Federn 12 die Bremse 10 so weit nach links, bis der Gewindesteg 17 wieder an der linken Gewindeflanke der Gewindegänge 26 der Schraubtriebspindel 1 anliegt. Die Federn 24 schieben den Ringkolben 16 noch weiter nach links, so daß sich Ringkolben 16 und Spannmutter nicht mehr berühren.

Im obigen Ausführungsbeispiel werden Reibschlüsse zur Herstellung von Verbindungen zwischen Schraubtriebmutter und Schraubtriebspindel bzw. Gehäuse beschrieben. Selbstverständlich sind andere kraft- und formschlüssige Verbindungen, die durch Kupplungen, Bremsen oder dergleichen realisiert werden können, anwendbar.

## Patentansprüche

1. Antriebsvorrichtung für mehrere Aggregate einer Maschine mit einem Schraubtrieb, der eine an einem Motor angetriebene Schraubtriebspindel (1) sowie mehrere auf der Schraubtriebspindel (1) sitzende, den jeweiligen Aggregaten zugeordnete Schraubtriebmuttern (2) aufweist, die jeweils in Gehäusen (6) der Aggregate drehbar, aber axial nicht verschiebbar gelagert sind, wobei in der Ruhephase des jeweiligen Aggregates die ihm zugeordnete Schraubtriebmutter (2) über eine erste Verbindung mit der Schraubtriebspindel (1) gegenüber dem Aggregat drehbar ist und für die Bewegungsphase des jeweiligen Aggregates die erste Verbindung gelöst wird und die Schraubtriebmutter (2) über eine zweite Verbindung mit dem Gehäuse (6) des jeweiligen Aggregates in Wirkverbindung bringbar ist,
**dadurch gekennzeichnet,**
**daß** der Schraubtrieb als Wälzschraubtrieb ausgebildet ist und die erste Verbindung eine als Bremse realisierte kraftschlüssige Verbindung ist, die ais eine um die Schraubtriebspindel (1) herum angeordnete axial verschiebbare Hülse (10) ausgebildet ist, die an ihrem Umfang in Gewindegänge (26) der Spindel (1) eingreifende Gewindestege aufweist, über die ein Kraftschluß herstellbar ist.

2. Antriebsvorrichtung nach Anspruch 1, **dadurch gekennzeichnet, daß** die zweite Verbindung eine kraftschlüssige Verbindung ist.

3. Antriebsvorrichtung nach Anspruch 1 oder, **dadurch gekennzeichnet, daß** die Bremse (10) unter Vorspannung steht.

4. Antriebsvorrichtung nach einem der Ansprüche 1 bis 3, **dadurch gekennzeichnet, daß** die unter Vorspannung stehende Bremse von einer gegen die Vorspannung wirkenden Vorrichtung (16) zum Lösen der Bremse lösbar ist.

5. Antriebsvorrichtung nach einem der Ansprüche 1 bis 4, **dadurch gekennzeichnet, daß** die Vorrichtung zum Lösen der Bremse gleichzeitig die zweite kraftschlüssige Verbindung herstellt.

6. Antriebsvorrichtung nach einem der Ansprüche 1 bis 5, **dadurch gekennzeichnet, daß** zwischen Gehäuse (6) und Schraubtriebmutter (2) Wälzlager (5) angeordnet sind.

7. Antriebsvorrichtung nach einem der Ansprüche 1 bis 6, **dadurch gekennzeichnet, daß** die Vorspannung für die Bremse (10) von mindestens einer Feder (24) geliefert wird, die den ersten Reibschluß zwischen Bremse (10) und Schraubtriebspindel (1) und Bremse (10) und Schraubtriebmutter (2) sicherstellt.

8. Antriebsvorrichtung nach einen der Ansprüche 1 bis 7, **dadurch gekennzeichnet, daß** die Vorrichtung zum Lösen der Bremse (10) als ein mit einem Druckmedium beaufschlagbarer, axial verschiebbarer Ringkolben ausgebildet ist.

9. Antriebsvorrichtung nach Anspruch 8, **dadurch gekennzeichnet, daß** zwischen Kolben und Schraubtriebmutter (2) bzw. mit letzterer fest verbundenen Zwischenelementen bei Druckbeaufschlagung des Kolbens (16) die zweite form- und/oder kraftschlüssige Verbindung sichergestellt wird und das Gehäuse (6) des Aggregates bei Antrieb der Schraubtriebspindel (1) zusammen mit der Schraubtriebmutter (2), der Bremse (10) und dem Kolben (16) axial verschoben wird.

10. Antriebsvorrichtung nach einem der Ansprüche 1 bis 9, **dadurch gekennzeichnet, daß** das Gehäuse bzw. mit diesem verbundene Zwischenelemente (15) mit mindestens einem Mitnehmer oder Führungsbolzen (23) verbunden sind, der in mindestens eine im Ringkolben vorgesehene entsprechende Ausnehmung eingreift.

11. Antriebsvorrichtung nach einem der Ansprüche 1 bis 9, **dadurch gekennzeichnet, daß** zwischen Ringkolben (16) und Gehäuse (6) bzw. mit diesem fest verbundenen Zwischenelementen (15) unter Vorspannung mindestens eine Feder (24) eingesetzt ist.

## Claims

1. Drive device for a plurality of units of a machine, having an inertia drive comprising a motor driven inertia drive spindle (1) as well as a plurality of inertia drive nuts (2) which are seated on the inertia drive spindle (1) and associated with respective units and which are mounted in respective housings (6) of the units so as to be rotary but not axially displaceable, and in the idle phase of a respective unit its associated inertia drive nut (2) is rotary relative to the unit via a first connection to the inertia drive spindle (1), and for the movement phase of a respective unit the first connection is released and the inertia drive nut (2) is via a second connection operationally connected to the housing (6) of a respective unit, **characterised in that** the inertia drive is designed as a roller inertia drive, and the first connection is a positive connection realised as a brake designed as an axially displaceable sleeve (10) arranged around the inertia drive spindle (1) with threaded webs which engage peripherally in threaded paths (26) of the spindle (1) by means of which a positive connection can be established.

2. Drive device according to Claim 1, **characterised in that** the second connection is a positive connection.

3. Drive device according to Claim 1 or 2, **characterised in that** the brake (10) is pretensioned.

4. Drive device according to one of Claims 1 to 3, **characterised in that** the pretensioned brake is releasable by a brake release device (16) which acts against the pretension.

5. Drive device according to one of Claims 1 to 4, **characterised in that** the brake release device simultaneously establishes the second positive connection.

6. Drive device according to one of Claims 1 to 5, **characterised in that** a roller bearings (5) are arranged between housing (6) and inertia drive nut (2).

7. Drive device according to one of Claims 1 to 6, **characterised in that** the pretensioning for the brake (10) is delivered by at least one spring (24) which ensures first frictional contact between brake (10) and inertia drive spindle (1) and brake (10) and inertia drive nut (2).

8. Drive device according to one of Claims 1 to 7, **characterised in that** the brake release device (10) is designed as an axially displaceable circular piston which is loadable by a pressure medium.

9. Drive device according to Claim 8, **characterised in that** between piston and inertia drive nut (2) or intermediate elements which are firmly connected to the latter the second shape and/or load positive connection is ensured when the piston (16) is pressureloaded, and the housing (6) of the unit is together with the inertia drive nut (2), the brake (10) and the piston (16) axially displaced when the inertia drive spindle (1) is driven.

10. Drive device according to one of Claims 1 to 9, **characterised in that** the housing or thereto connected intermediate elements (15) are connected to at least one pickup or guide pin (23) which engages at least one corresponding cutout in the circular piston.

11. Drive device according to one of Claims 1 to 9, **characterised in that** between circular piston (16) and housing (6) or thereto firmly connected intermediate elements (15) is applied at least one pretensioned spring (24).

## Revendications

1. Dispositif d'entraînement pour plusieurs organes d'une machine comportant un dispositif d'entraînement à vis, qui comporte une broche filetée d'entraînement (1) entraînée par un moteur, ainsi que plusieurs écrous d'entraînement (2) qui sont montés sur la broche filetée d'entraînement (1), sont associés aux organes respectifs et sont montés de manière à pouvoir tourner respectivement dans des boîtiers (6) des organes, mais ne sont pas déplaçables axialement, et dans lequel pendant la phase de repos de l'organe respectif, l'écrou d'entraînement (2) associé à cet organe, peut être entraîné en rotation par rapport à l'organe par l'intermédiaire d'une première liaison avec la broche filetée d'entraînement (1) et, pour la phase de déplacement de l'organe respectif, la première liaison est supprimée et l'écrou d'entraînement (2) peut être amené à coopérer par l'intermédiaire d'une seconde liaison, avec le boîtier (6) de l'organe respectif, **caractérisé en ce que** le dispositif d'entraînement à vis est agencé sous la forme d'un dispositif d'entraînement à vis roulant et que la première liaison est une liaison de force réalisée sous la forme d'un frein et agencée sous la forme d'une douille (10) qui est disposée autour de la broche filetée d'entraînement (1), qui est déplaçable axialement et possède, sur sa périphérie, un filetage qui s'engage dans les filets de vis (26) de la broche (1) et au moyen duquel une liaison de force peut être établie.

2. Dispositif d'entraînement selon la revendication 1, **caractérisé en ce que** la seconde liaison est une liaison de force.

3. Dispositif d'entraînement selon la revendication 1 ou 2, **caractérisé en ce que** le frein (10) est placé sous précontrainte.

4. Dispositif d'entraînement selon l'une des revendications 1 à 3, **caractérisé en ce que** le frein placé sous précontrainte peut être desserré par un dispositif (16) qui agit à l'encontre de la précontrainte et sert à desserrer le frein.

5. Dispositif d'entraînement selon l'une des revendications 1 à 4, **caractérisé en ce que** le dispositif servant à desserrer le frein établit simultanément la seconde liaison de force.

6. Dispositif d'entraînement selon l'une des revendications 1 à 5, **caractérisé en ce que** des roulements (5) sont disposés entre le boîtier (6) et l'écrou d'entraînement (2).

7. Dispositif d'entraînement selon l'une des revendications 1 à 6, **caractérisé en ce que** la précontrainte pour le frein (10) est fournie par au moins un ressort (24), qui garantit la première liaison par frottement entre le frein (10) et la broche filetée d'entraînement (1) et entre le frein (10) et l'écrou d'entraînement (2).

8. Dispositif d'entraînement selon l'une des revendications 1 à 7, **caractérisé en ce que** le dispositif pour desserrer le frein (10) est agencé sous la forme d'un piston annulaire déplaçable axialement, qui peut être chargé par un fluide sous pression.

9. Dispositif d'entraînement selon la revendication 8, **caractérisé en ce qu'**une seconde liaison par formes complémentaires et/ou une seconde liaison de force est garantie entre le piston et l'écrou d'entraînement (2) ou des éléments intercalaires reliés de façon fixe à ce dernier, dans le cas où le piston (16) est chargé par une pression, et le boîtier (6) de l'organe est déplacé axialement, lors de l'entraînement de la broche filetée (1), conjointement avec l'écrou d'entraînement (1), le frein (10) et le piston (16).

10. Dispositif d'entraînement selon l'une des revendications 1 à 9, **caractérisé en ce que** le boîtier ou des éléments intercalaires (15) reliés au carter sont reliés à au moins un organe d'entraînement ou à un axe de guidage (23), qui s'engage dans au moins un évidement correspondant, qui est prévu dans le piston annulaire.

11. Dispositif d'entraînement selon l'une des revendications 1 à 9, **caractérisé en ce qu'**au moins un ressort (24) est inséré, sous précontrainte, entre le piston annulaire (16) et le boîtier (6) ou des éléments intercalaires (15) reliés de façon fixe à ce dernier.
